Europäisches Patentamt

European Patent Office

Office européen des brevets

(11) Publication number: **0 323 029**
**A2**

# EUROPEAN PATENT APPLICATION

(21) Application number: 88311127.0

(51) Int. Cl.4: **G06F 15/40**

(22) Date of filing: **24.11.88**

(30) Priority: **23.12.87 US 138538**

(43) Date of publication of application:
**05.07.89 Bulletin 89/27**

(84) Designated Contracting States:
**BE CH DE ES FR GB IT LI NL SE**

(71) Applicant: **International Business Machines**
**Corporation**
**Old Orchard Road**
**Armonk, N.Y. 10504(US)**

(72) Inventor: **MacPhail, Margaret Gardner**
**2105 Tower Drive**
**Austin Texas 78703(US)**

(74) Representative: **Hawkins, Anthony George**
**Frederick**
**IBM United Kingdom Limited Intellectual**
**Property Department Hursley Park**
**Winchester Hampshire SO21 2JN(GB)**

(54) **Method of operating an electronic information system for distributing documents grouped into folders.**

(57) This invention relates to methods of distributing a folder having a plurality of document filed therein within an information processing system. The documents filed in the folder have an ordered relationship. An end user indicates to the system that the folder is to be distributed to one or more recipient end users. The end user enters data which identifies the folder and the addresses of the recipient end users. The system then builds the necessary structures to transmit the folder to the identified recipient end users such that the documents included therein are maintained in the order established by the folder.

**F I G. 1**

EP 0 323 029 A2

# METHOD OF OPERATING AN ELECTRONIC INFORMATION SYSTEM FOR DISTRIBUTING DOCUMENTS GROUPED INTO FOLDERS

## DESCRIPTION

This invention relates to a method of operating an electronic information processing system and more particularly, to a method of distributing a plurality of documents grouped as a folder to at least one end user of the information processing system.

In recent times, automation of offices is rapidly becoming a reality for an increasing number of organizations. Office automation helps the organizations integrate data files with text, store and retrieve correspondence and reports electronically, distribute documents electronically and support the day-to-day activities of administrative personnel, professionals and managers.

While some of the benefits of electronic document processing can be realized from a single, stand-alone office system, a network which connects office systems in various locations in the organization increases the productivity of the organization. Physically, a network is a combination of interconnected pieces of equipment and programs used for moving information between points where it may be generated, processed, stored and used. From the viewpoint of an user of the network, the network is a collection of services which are useful in creating, revising, distributing, filing and retrieving documents.

In today's electronic office, documents are physically grouped or stored using one of two following techniques: partition data sets and directories. Partition data sets are storage areas on a disk or other form of storage medium. Documents stored in a partition data set only exist in that storage area and a partition data can not be deleted until all of the documents included therein have been removed. Generally, the documents are filed in the partition data set in the order created and there is no other relationship regarding the order to the documents.

Directories are similar to partition data sets in that they are physical storage areas for documents for files. Documents can not exist in more that one physical storage area. The documents contained in a directory are not logically organized.

In regards to both the partition data sets and the directories, if one filed a group of documents which are related to a general topic and one wanted to review the group of documents, one would have to first locate the partition data set or sets or the directory or directories containing the documents. In partition data sets and directories, documents have to be deleted from the bottom up. Additionally, it is very difficult to re-arrange documents stored or grouped using these two techniques. The documents must be copied and then deleted. Moreover, partition data sets, except for the contents thereof, can not be distributed. Directories can not be distributed in their entirety. Linear and hierarchial groupings can not be distributed using directories or partition data sets because the groupings mechanism utilized therewith will be lost. This type of operation technique reduces the efficiency of the electronic office.

Consequently, what is needed is a technique for storing documents have a logical order wherein all of the documents can be operated on with a single command and in the logical order required or for distributing documents grouped into folders.

According to the invention, there is provided a method of operating an electronic information processing system for storing and manipulating data in the form of documents, comprising the steps of filing documents in the system in folders, each folder comprising a plurality of documents grouped in an ordered relationship; and distributing, in response to input data identifying a stored folder and defining addressees, an identified folder to the defined addressees by transmitting the documents in the identified folder in the order defined by the relationship of the documents in the folder.

A preferred embodiment of the invention will now be described, by way of example, with reference to the drawings, in which:

Fig. 1 is a block diagram of a document management system;

Fig. 2 is a model of a document showing the various objects associated with a document stored in the system of Fig. 1;

Figs. 3 to 5 are object structures which are employed in generating a folder document; and

Figs. 6 to 14 are various flow charts illustrating detailed steps of the method of the present invention.

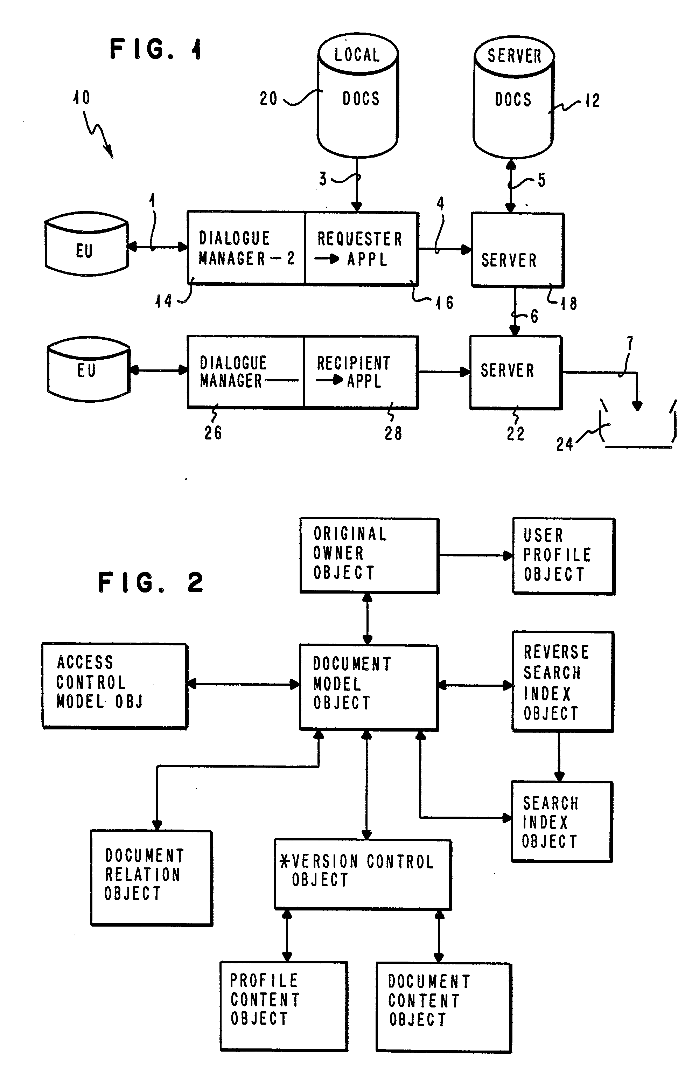

Fig. 1 shows a document management system 10 which controls the creation, retrieval, editing and distribution of documents within an information processing system. Moreover, the document management system 10 enables an end user (EU) to create a folder which is a document having a plurality of documents having an ordered relationship within the folder. In essence, the folder is created and the documents which are to be stored in the folder are identified by the EU. The end user also specifies the order which the documents will be stored within the folder. Thus, the EU creates the folder and files it into a library 12. Subsequent operations involving the folder created can be performed on the entire folder without retrieving all of the individual documents stored therein. After the folder has been created and the EU desires to distribute the folder to a recipient EU or a group of recipient EUs, the EU interacts with a dialog manager application 14 which provides all of the data or screens necessary to distribute the folder with the documents. The EU can also create a folder to be distributed without filing the folder using documents and folder documents already stored in the library 12 or using documents stored in a local storage medium. For example, the dialog manager application will present a screen which request the EU to enter the addressing information for all of the recipient EUs, any distribution characteristics, any ordering criteria for the documents within the folder to be distributed, an indication that a document is contained within a particular folder and any pointers to the physical location of all of the documents to be distributed. A folder with all of the documents contained therein can be distributed from the library 12 by the EU entering a pointer to the folder and indicating that all of the documents at all levels of nesting are to be distributed. Similarly, the folder in the library 12 can be distributed with the documents contained therein to a specified level of nesting by indicating a pointer to both the folder and the level of nesting. These documents may be directly accessible to a requester application program 16 or directly accessible to a requester server 18 which is associated with the requester application program 16. After the dialogue manager application 14 has gathered the above-identified information, it transmits the information to the requester application program 16.

The requester application application program 16, in response to input from the dialogue manager application 14, builds a distribution request and transmits the request to the requester server 18. The requester application program 16 makes a copy of each of the locally accessible documents identified by the EU which are filed in a local storage medium 20. The copies of the documents are transmitted to the requester server 18 along with the request. Additionally, the requester application program 16 transmits pointers to the physical location of all of the documents to be distributed which are filed in the library 12 and not otherwise identified by the folder document containing the documents.

The requester server 18 makes a copy of all of the documents which was not received with the distribution request. The requester server 18 will transmit all of the information received from the requester application program 16 along with copies of the any documents filed in the library 12 to recipient servers, such as recipient server 22, associated with an recipient EU specified in the distribution request. Additionally, the requester server 18 will transmit any pointers to the physical location of any documents to be distributed which are not filed in the local storage medium 20 or the library 12 but are stored elsewhere within the information processing system.

The recipient server 22, in response to the input from the requester server 18, then builds a folder table-of-contents and a document-in-folder table-of-contents and places a pointer to the distributed folder in the recipient EU mail queue 24.

The document management system 10 shown in Fig. 1 utilizes a uniform structure for exchanging information within the system. This structure includes an encoding scheme which is designed to convey any document, irrespective of it content, from one type of office system to another and to communicate the intent of the person creating or transmitting a document as to the method of processing thereof. One type of structure which meets all of these requirements is the Document Interchange Architecture (DIA) which is a part of a DISOSS office system marketed by the International Business Machines Corporation.

DIA is a program-to-program communication architecture which defines the protocols and data structures that enable programs to interchange information such as documents and messages in a consistent and predictable manner. DIA is independent of the type of information managed by DIA services. DIA includes document objects which contain parameters or descriptors that describe the contents of the information being transmitted. The descriptors contained in the objects include the name under which the information is filed, the authors, the subject of the information and the date the information was filed in the document history. These descriptors enable a document to be searched in a storage medium such as the server library 12.

The server library 12 performs various services for the system 10. These services are used for storing and retrieving documents electronically. Whenever a document is filed in the server library 12, a set of descriptors called a document profile is filed with it. The profile contains the descriptors noted above. Document profiles are used in searching for documents in the library 12. For purposes of illustration and not limitation, a EU can ask the system 10 to search for all documents regarding a particular subject and by a certain author which was filed in the library 12 between any two dates. Upon completing the search, the

3

system presents the EU with a list of the documents which meet the search criteria. The EU could then ask the system 10 to retrieve a copy of a specific document on the list from the library an deliver the copy the EU for printing or viewing.

The server library 12 also provides the following services: file documents in and retrieve or delete documents from the library; update work in progress documents in the library; specify a security level to associate with the document that is being filed; allow authorized end users other than the EU who filed the document to retrieve the document from the library and perform searches for and retrieve documents in the library for other end users. The server library 12 assigns each new document filed in therein a unique name called a library-assigned document name (LADN). This name is returned to the requester and can be used to uniquely identify the document at some later time.

Referring to Fig. 2, each document stored in the server library 12 includes the objects shown therein. All of the objects shown in Fig. 2 are created in response to the processing a FILE command. A document model object contains information concerning ownership and attributes of a specific document. This object controls the access to the document during its life in the library.

An original owner object contains or points to information used by an owner of the document to control access to the document as filed.

A document content object provides for the storage of the document content and for saving information relating to the actual size of the filed document.

A document relation object describes the logical relationships between the document and other documents. If the document is a folder, each of the documents contained therein has a pointer or LADN entry in this object. If this document is in one or more folders, then each folder has a pointer or LADN entry in this object. Enter and remove history may be maintained for the document either as a folder or as a document in other folders.

An access control model object is created when the document owner authorizes other users to access the document.

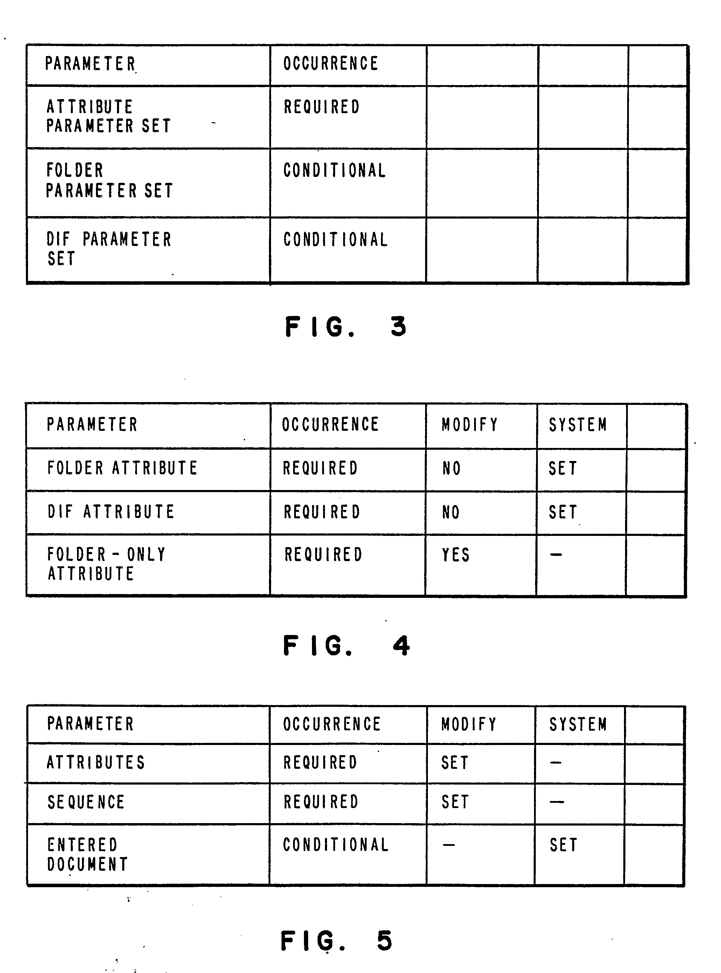

Structures for all of the above-identified objects except document relations object are a part of the DISOSS office system and will not be described herein. Fig. 3 shows the structure of the document relation object which consists of the following: an attribute parameter set and a folder document section, a document-within-a-folder section.

The attribute parameter set indicates whether or not the document associated with the document relation object is a folder or whether or not the document is a 'folder-only' document. Fig. 4 illustrates the structure for the attribute parameter set. A folder attribute indicates whether or not the document associated with the document relation object is a folder. If the document is a folder, then a folder section parameter set is required. A DIF (document in folder) attribute indicates whether or not the document is contained within any folders. A folder-only attribute indicates whether or not the document can be viewed as existing on its own when it is included within a folder. Documents are viewed as folder-only when both the DIF and Folder-only attributes are positively set.

A physical document in a physical folder is a folder-only document. In essence, the physical document exists in the folder and can not stand on its own. However, electronic documents can logically exist in multiple places at the same time. Therefore, a document can appear to be in more than one folder and standing on its own all at the same time. Whether or not the document can stand on its own when it is also in a folder is indicated by the folder-only attribute. Folder-only documents are viewed as standalone when they are not contained by any folders.

The folder document section includes the following sections: folder attributes and entered document parameters set. The folder attributes indicates the folder characteristics such as ordering criteria and history. Each document entered into the folder document associated with the document relation object will have an entered document parameter set. Fig. 5 illustrates the structure for the folder document section. The attributes parameter allows for the specification of an open option and the history option. The folder is open so that documents can be entered into or removed from the folder after it has been filed in the server library 12. As documents are entered into and removed from the open folder, the history option is specified by an entered document parameter. The entered document parameter is deleted when a document is removed from the folder and is created when the same document is reentered into the folder. The removal date and time and the requester's ID are added to the entered document parameter set. When the document is re-entered into the folder, the date and time and the requester's ID is added to the entered document parameter set.

Set out below is an illustration of an application program useable by the requester application 16 in distributing a folder within the information processing system. The program is in program design language from which source code and machine code are derivable.

```
BEGIN REQUESTER PROC
        INPUT
                ADDRESSING AND DISTRIBUTION CHARACTERISTICS.
                DO FOR EACH DOCUMENT SPECIFIED IN THIS
                        DISTRIBUTION REQUEST:

                        A POINTER TO THE PHYSICAL DOCUMENT
                        (PPTR) WHICH WILL BE A LOCAL POINTER
```

```
BEGIN REQUESTER PROC
        INPUT
```

OR A LIBRARY IDENTIFIER.

THE PHYSICAL DOCUMENT CONTAINS
RELATED DATA OBJECTS WHICH DEFINE
THE FOLDER CHARACTERISTICS IF THE
DOCUMENT IS A FOLDER.  THESE
CHARACTERISTICS INCLUDE THE
FOLDER ORDERING CRITERIA.

A VALUE FOR THE LEVEL OF FOLDER NESTING
IF THE DOCUMENT IS A FOLDER IN LIBRARY.

A UNIQUE IDENTIFIER FOR THIS DOCUMENT
WITHIN THE SCOPE OF THIS REQUEST.

A REFERENCE IDENTIFIER FOR THE FOLDER
CONTAINING THIS DOCUMENT, IF THIS
DOCUMENT IS TO BE INCLUDED IN A FOLDER.

```
ENDDO
PROCESS
    DO FOR EACH DOCUMENT INDIVIDUALLY SPECIFIED
    BY THE DISTRIBUTION REQUEST TO BE
    TRANSMITTED IN THE DISTRIBUTED FOLDER
    (BUILD AN IDD):
        IF THE DOCUMENT RESIDES ON THE LIBRARY,
            THEN
                SET THE DOCUMENT POINTER (PPTR) TO
                ITS LIBRARY IDENTIFIER.
                IF THE DOCUMENT IS A FOLDER, THEN
                    SET THE FOLDER
                    LEVEL-OF-NESTING (FLN) AS
                    SPECIFIED.
            ENDIF
        ELSE
                COPY THE DOCUMENT AND ITS RELATED
                OBJECT DATA.
```

```
                    SET THE DOCUMENT ADDRESS (PPTR) TO

                    · POINT TO THE POSITION OF THE

                    DOCUMENT IN THE DISTRIBUTION

                    REQUEST.

              ENDIF

              SET THE DOCUMENT IDENTIFIER (DID) TO

              THE SPECIFIED VALUE.

              IF THE DOCUMENT TO BE DISTRIBUTED IS TO

                    BE INCLUDED IN A FOLDER, THEN

                          SET THE REFERENCE DOCUMENT

                          IDENTIFIER (RID) AND FOLDER

                          POSITION (POS) AS SPECIFIED.

                          (RID=DID OF THE FOLDER CONTAINING

                          THIS DOCUMENT)

              ENDIF

        ENDDO

        TRANSMIT COMPLETED DISTRIBUTION COMMAND TO

        REQUESTER SERVER.

  END REQUESTER PROC
```

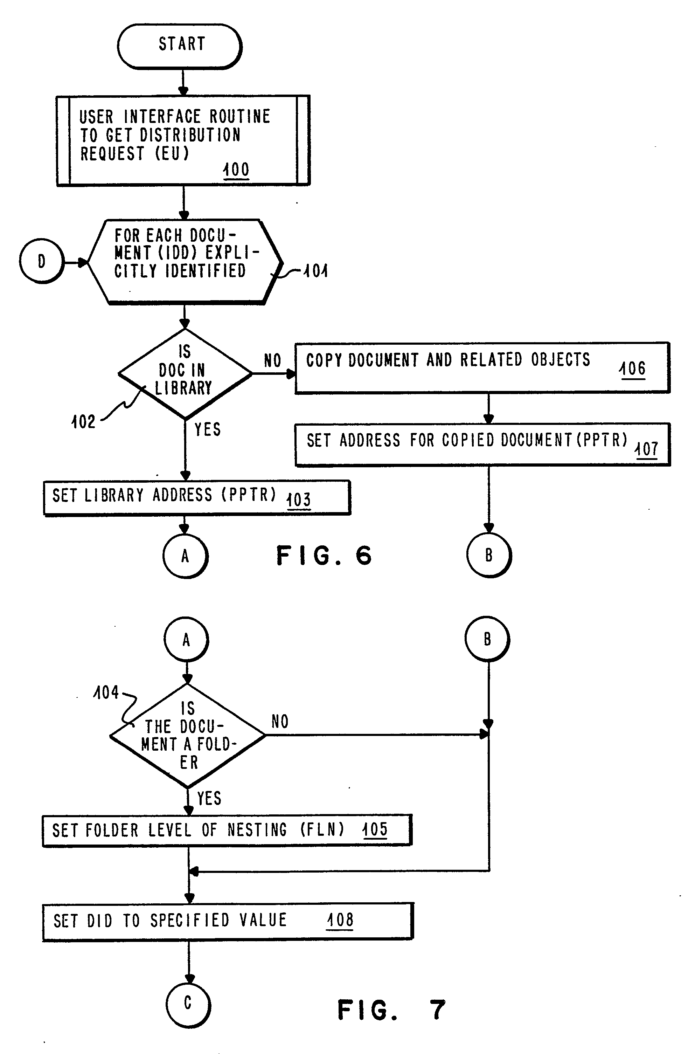

Referring to Figs. 6, 7 and 8, there is shown a flow chart for the requester application program in distributing a folder in the information processing system. First, the requester application program 16 interfaces with the dialogue manager application 14 in step 100 to get the distribution request. Steps 101 and 102 determine for each document explicitly identified in the request whether the document is filed in library 12. A library (LADN) address pointer is set in step 103 if the document is stored in the library 12. Step 104 determines whether the document is a folder. Step 105 sets the folder level of nesting (FLN) if the document in step 104 is a folder. If the document is not filed in the library 12 in step 102, the document and its related object data are copied in step 106 and an address pointer for the copied document is set in step 107. The document identifier (DID) is set as specified in step 108. Step 109 determines whether the document is contained in a folder. The RIDs and POS as specified are set in step 110 if the document is contained in a folder. Otherwise, a determination is made in step 111 as to whether the document is the last document explicitly specified in the distribution request. Control is transferred from step 111 to step 101 if there are other documents to be processed. Otherwise, the complete distribution request is transmitted to the requester server 18 in step 112.

The distribution request which is transmitted to the requester server 18 includes addressing and distribution characteristics, the IDD operand for each document explicitly identified, the folder level-of-nesting indicator (FLN) for folders to be copied by the requester server 18 and a document unit for each document transmitted with the request. Each IDD operand includes the pointer to the physical copy of the document (PPTR), the unique identifier (DID) for this IDD within the scope of the request, any references (RIDs) for any folders containing this document, and any folder position or positions (POS) for document folders containing this document. Each folder document unit includes folder data area such as folder ordering criteria and any other folder characteristics. The folder characteristics are only required if the document is a folder. The document unit further includes the document-in-folder data area which includes the characteristics of the document when it is contained within a folder, any document descriptors and document content.

Set out below is an illustration of an application program useable by the requester server 18 in distributing a folder within the information processing system. The program is in program design language from which source code and machine code are derivable.

```
BEGIN REQUESTER SERVER PROC
     INPUT
          A DISTRIBUTION REQUEST WHICH INCLUDES:
               ADDRESSING AND DISTRIBUTION
               CHARACTERISTICS.
               AN IDD OPERAND FOR EACH DOCUMENT
               EXPLICITLY IDENTIFIED INCLUDING:
```

```
A POINTER TO THE PHYSICAL COPY
(PPTR).
AN UNIQUE IDENTIFIER (DID) FOR
THIS IDD WITHIN THE SCOPE OF THE
REQUEST.
REFERENCE(S) (RIDs) FOR ANY
FOLDERS CONTAINING THIS DOCUMENT.
FOLDER POSITION(S) (POS) FOR
DOCUMENT FOLDERS CONTAINING THIS
DOCUMENT.
PROCESS
    SET NDID = TO HIGHEST DID VALUE TRANSMITTED
WITH THE REQUEST.
    DO FOR EVERY DID TRANSMITTED IN THE REQUEST:
        IF THE DOCUMENT IS IN THE LIBRARY, THEN
            COPY THE DOCUMENT AND ITS RELATED
            OBJECT DATA.
            SET THE DOCUMENT ADDRESS (PPTR) TO
            POINT TO THE POSITION OF THE DOCUMENT
            IN THE NEW REQUEST UNIT.
        IF THE DOCUMENT IS A FOLDER, THEN
                DO FOR EACH LEVEL SPECIFIED (FLN):
                    DO FOR EACH DOCUMENT IN THE
                        LEVEL:
                            IF THE DOCUMENT HAS NOT
                            BEEN COPIED IN THIS
                            REQUEST BEFORE, THEN
                                COPY THE DOCUMENT
                                AND ITS RELATED
                                OBJECT DATA.
                                SET THE DOCUMENT
                                ADDRESS (PPTR) TO
                                POINT TO THE
                                POSITION OF THE
                                DOCUMENT IN THE NEW
```

9

```
                              REQUEST UNIT.

                              SET THE DOCUMENT

                              IDENTIFIER TO AN

                              UNIQUE VALUE WITHIN

                              THE COMMAND

                              (DID=NDID+1).

                              SET NDID=NDID+1.

                          ENDIF

                          SET THE REFERENCE

                          DOCUMENT IDENTIFIER TO

                          CORRESPOND TO THE FOLDER

                          DOCUMENT IDENTIFIER FOR

                          THE FOLDER THAT CONTAINS

                          THIS DOCUMENT (RID=DID

                          OF THE FOLDER CONTAINING

                          THIS DOCUMENT.

                      ENDDO

                  ENDDO

              ENDIF

          ENDIF

      ENDDO

      TRANSMIT THE NEW REQUEST DISTRIBUTION UNIT

      TO THE TRANSPORT FOR DELIVERY TO THE

      RECIPIENT SERVER(S).

  END REQUESTER SERVER PROC
```

The requester server 18, in response to the distribution request generated by the requester application program 16, builds a new operand (IDD) for each document that it copies from the library 12. The new IDD is necessary because that document will have a pointer to the document unit within the received request instead of a unique library pointer. Documents which are copied with folders from the library 12 did not have an IDD from the requester application program 16. Thus, these documents require a new IDD as well. Each additional IDD must have a unique identifier within the command to be sent to the recipient server 22. A NDID value is a temporary counter to show the highest DID value currently assigned.

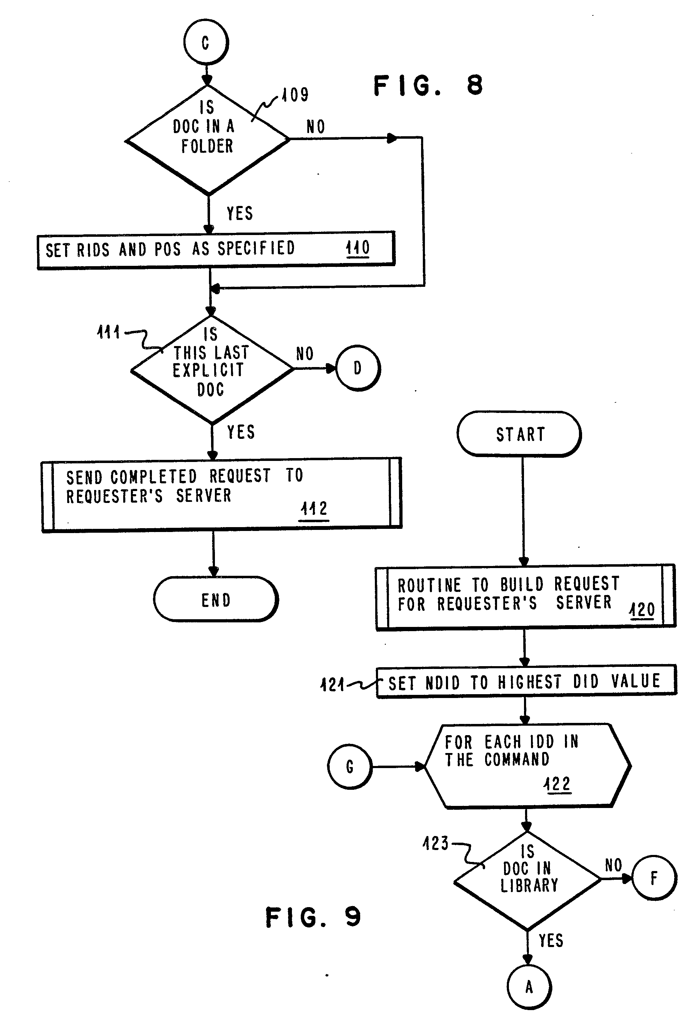

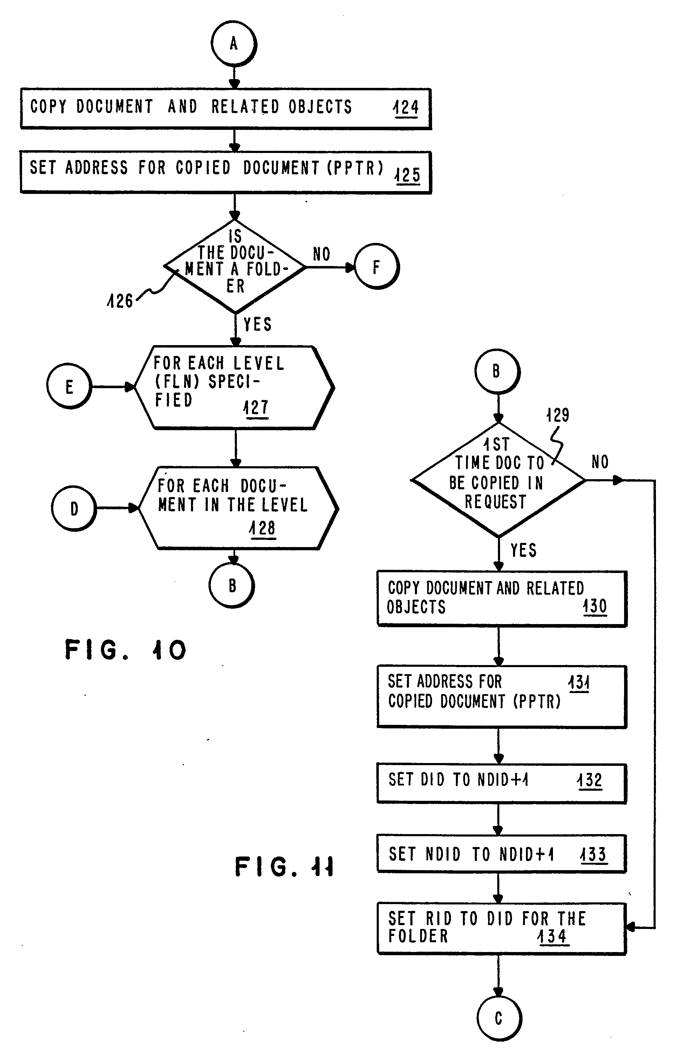

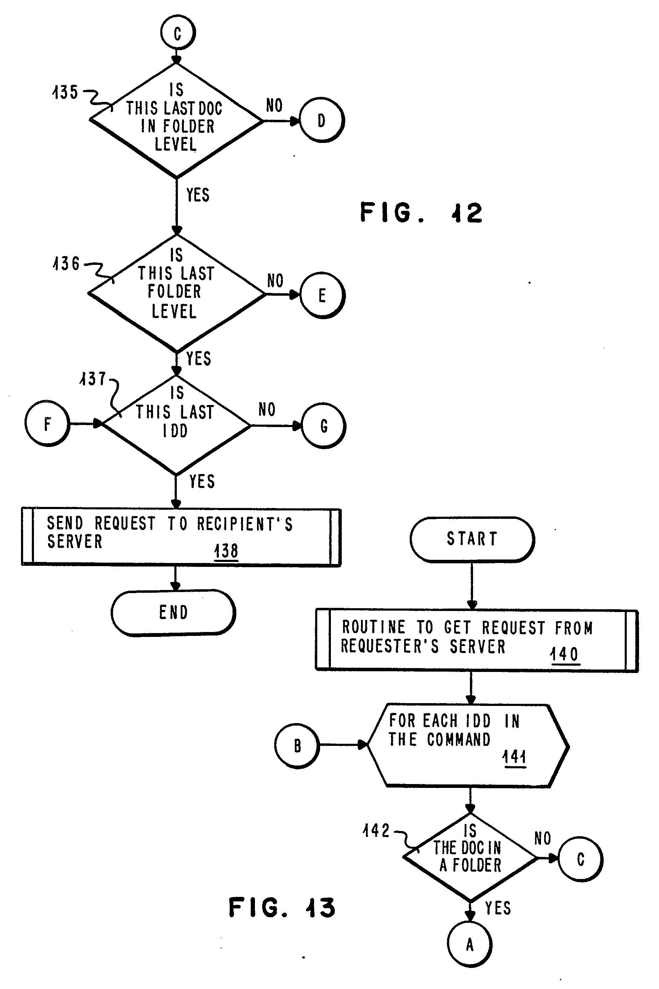

Referring to Figs. 9 through 12, there is shown a flow chart for the requester server 18 in distributing the folder received from the requester application program 16. In steps 120 and 121, a new request is built and the temporary counter is set to the highest DID value, respectively. Steps 122 and 123 determine for each IDD in the received request whether the document is filed in the library 12. If the document is filed in library 12, a copy of the document and its related objects are made in step 124. An address for the copied document is set in step 125. Step 126 determines whether the document is a folder. Steps 127, 128 and 129 determine for each level specified and each document in each level, whether the document has been copied before in the context of this request. If the document has not been copied previously, the document and its related objects are copied in step 130, an address for the copied document is set in step 131, the DID for this document is set to a value which is equal to NDID+1 in step 132, the value of NDID is increased by a value of one in step 133 and the RID is set to the RID for the folder in step 134. Step 135 determines whether the document is the last document in the folder level. If there are other documents to be processed for this folder level, control is transferred to step 128. Otherwise, step 136 determines whether the level of the folder is the last level. If there are other levels in the folder, control is transferred to step 127. Step 137 determines whether there are other IDDs to be processed. If there are other IDDs to be processed, control is transferred from step 137 to step 122. Otherwise, step 138 transmits the request, which is generated by the requester server 18, to recipient server 22 which is associated with a recipient EU.

Set out below is an illustration of an application program useable by the recipient server 22 in receiving a distributed folder within the information processing system. The program is in program design language from which source code and machine code are derivable.

```
BEGIN RECIPIENT SERVER PROC
      INPUT
            A DISTRIBUTION REQUEST INCLUDING:
                  ADDRESSING AND DISTRIBUTION
                  CHARACTERISTICS.
            A COPY OF EVERY DOCUMENT TO BE DISTRIBUTED WITH THE FOLDER.
            AN IDD OPERAND FOR EACH DOCUMENT TO BE DISTRIBUTED TO THE
RECIPIENT EU.
                  A POINTER TO THE PHYSICAL COPY (PPTR).
                  AN UNIQUE IDENTIFIER (DID) FOR
                  THIS IDD WITHIN THE SCOPE OF THE
                  REQUEST.
                  REFERENCE(S) FOR ANY FOLDERS
                  CONTAINING THIS DOCUMENT.
                  FOLDER POSITION(S) (POS) FOR
                  DOCUMENT FOLDERS CONTAINING THIS
                  DOCUMENT.
            A DOCUMENT UNIT FOR EACH DOCUMENT
            TRANSMITTED WITH THIS REQUEST
            INCLUDING:
                  FOLDER DATA AREA WHICH INCLUDES
                  FOLDER ORDERING CRITERIA AND OTHER
                  FOLDER CHARACTERISTICS.
                        THIS IS REQUIRED IF THE
                        DOCUMENT IS A FOLDER ONLY.
                  DOCUMENT-IN-FOLDER DATA AREA WHICH
                  INCLUDES THE CHARACTERISTICS OF
                  THE DOCUMENT WHEN IT IS CONTAINED
                  WITHIN A FOLDER.
                  DOCUMENT DESCRIPTORS.
                  DOCUMENT CONTENT.
      PROCESS
            DO FOR EVERY DID IN THE COMMAND:
                  IF THE DOCUMENT REFERENCES A FOLDER,
                        THEN
```

```
          COPY THE FOLDER'S DID INTO THE
          DOCUMENT' DOCUMENT-IN-FOLDER
          TABLE-OF-CONTENTS.
          COPY THE DOCUMENT'S DID INTO THE
          FOLDER'S FOLDER TABLE-OF-CONTENTS
          ACCORDING TO THE FOLDER'S ORDERING
          CRITERIA.
     ENDIF
  ENDDO
  PLACE A POINTER TO THE DISTRIBUTED FOLDER
  INTO THE RECIPIENT EU'S DOCUMENT QUEUE.
END RECIPIENT SERVER PROCESS
```

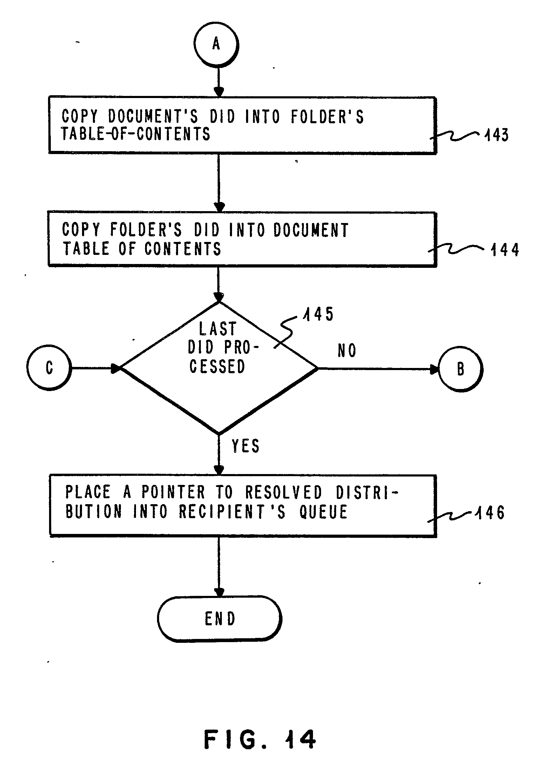

Referring to Figs. 13 and 14, there is shown a flow chart for the recipient server 22 in distributing the folder to the recipient EU. In step 140, the recipient server 22 interacts with the requester server 18 to get the distribution request. Step 141 and 142 determines for each IDD in the received request whether a document is in a folder. The document's DID is copied into the folder's table-of-contents in step 143 and the folder's DID is copied into the document table-of-contents in step 144. Step 145 determines whether the last DID has been processed. If there are other DIDs to be processed, control is transferred from step 145 to step 141. Otherwise, a pointer to the distributed folder is placed in the recipient queue 24 in step 146.

The recipient EU access the distributed folder by interacting with a recipient dialogue manager 26 and the recipient application program 28. The dialogue manager 26 is similar to the dialogue manager 14. Similarly, the recipient application program 28 is similar to the requester application program 16 discussed above.

In summary, a unique method of distributing a folder within an information processing system. An end user indicates to the system that the folder is to be distributed to one or more recipient end users. The end user enters data which identifies the folder and the addresses of the recipient end users. The system then builds the necessary structures to transmit the folder to the identified recipient end users.

While the invention has been particularly shown and described with reference to a preferred embodiment, it will be understood by those skilled in the art that various changes in form and detail may be made without departing from the spirit and scope of the invention.

## Claims

1. A method of operating an electronic information processing system for storing and manipulating data in the form of documents, comprising the steps of:
filing documents in the system in folders, each folder comprising a plurality of documents grouped in an ordered relationship; and
distributing, in response to input data identifying a stored folder and defining addressees, an identified folder to the defined addressees by transmitting the documents in the identified folder in the order defined by the relationship of the documents in the folder.

2. A method according to claim 1, in which the folders include levels of documents nested therein, and in which said step of distributing includes the step of indicating the level of nesting of documents in the folder whereby the documents in a folder are transmitted in accordance with the nesting levels.

# FIG. 1

# FIG. 2

| PARAMETER | OCCURRENCE | | | |
|---|---|---|---|---|
| ATTRIBUTE PARAMETER SET | REQUIRED | | | |
| FOLDER PARAMETER SET | CONDITIONAL | | | |
| DIF PARAMETER SET | CONDITIONAL | | | |

# FIG. 3

| PARAMETER | OCCURRENCE | MODIFY | SYSTEM | |
|---|---|---|---|---|
| FOLDER ATTRIBUTE | REQUIRED | NO | SET | |
| DIF ATTRIBUTE | REQUIRED | NO | SET | |
| FOLDER - ONLY ATTRIBUTE | REQUIRED | YES | — | |

# FIG. 4

| PARAMETER | OCCURRENCE | MODIFY | SYSTEM | |
|---|---|---|---|---|
| ATTRIBUTES | REQUIRED | SET | — | |
| SEQUENCE | REQUIRED | SET | — | |
| ENTERED DOCUMENT | CONDITIONAL | — | SET | |

# FIG. 5

FIG. 6

FIG. 7

## FIG. 8

C

IS
DOC IN A
FOLDER    —109

NO

YES

SET RIDS AND POS AS SPECIFIED    110

111—

IS
THIS LAST
EXPLICIT
DOC

NO → D

YES

SEND COMPLETED REQUEST TO
REQUESTER'S SERVER    112

END

START

ROUTINE TO BUILD REQUEST
FOR REQUESTER'S SERVER    120

121— SET NDID TO HIGHEST DID VALUE

G → FOR EACH IDD IN
THE COMMAND    122

123—

IS
DOC IN
LIBRARY

NO → F

YES

A

## FIG. 9

A

COPY DOCUMENT AND RELATED OBJECTS 124

SET ADDRESS FOR COPIED DOCUMENT (PPTR) 125

IS THE DOCU-MENT A FOLD-ER 126 — NO → F

YES

E → FOR EACH LEVEL (FLN) SPECI-FIED 127

D → FOR EACH DOCU-MENT IN THE LEVEL 128

B

**FIG. 10**

B

1ST TIME DOC TO BE COPIED IN REQUEST 129 — NO →

YES

COPY DOCUMENT AND RELATED OBJECTS 130

SET ADDRESS FOR COPIED DOCUMENT (PPTR) 131

SET DID TO NDID+1 132

SET NDID TO NDID+1 133

SET RID TO DID FOR THE FOLDER 134

C

**FIG. 11**

135 — IS THIS LAST DOC IN FOLDER LEVEL — NO → D

YES

136 — IS THIS LAST FOLDER LEVEL — NO → E

YES

137 — IS THIS LAST IDD

F →

NO → G

YES

SEND REQUEST TO RECIPIENT'S SERVER    138

END

FIG. 12

START

ROUTINE TO GET REQUEST FROM REQUESTER'S SERVER    140

B → FOR EACH IDD IN THE COMMAND    141

142 — IS THE DOC IN A FOLDER — NO → C

YES

A

FIG. 13

FIG. 14